# EUROPEAN PATENT APPLICATION

(11) **EP 4 748 975 A1**
(43) Date of publication of application: **27.05.2026**
(21) Application number: 24315536.3
(22) Date of filing: 25.11.2024
(51) Int. Cl.: C25B 1/24, C25B 1/02, C01B 7/00, C01B 17/00, B01D 53/00

(54) **PROCESS FOR HBR ELECTROLYSIS WITH IMPROVED YIELD AND ENERGY EFFICIENCY**

(71) Applicant: TotalEnergies OneTech, 92400 Courbevoie (FR)
(72) Inventor: Veryasov, Gleb, B-7181 Seneffe (BE); Grishin, André, B-7181 Seneffe (BE); Kezibri, Nouaamane, B-7181 Seneffe (BE)
(74) Representative: Mellet, Valérie Martine

(57) **Abstract**

A process of hydrogen production comprising the following steps:
i) providing an electrolysis unit (51) comprising one or more electrolytic cells (53) each comprising an anode (59), a cathode (55), and an ion-exchange membrane (57);
ii) providing an anolyte (43) comprising hydrogen bromide at a concentration ranging from 0.5 to 12.5 M; and a catholyte (61); the catholyte comprising an aqueous solution of one or more strong acids selected from hydrochloric acid, nitric acid, sulfuric acid, perchloric acid, hydroiodic acid or any mixtures thereof, at a pH of at most 1.0;
iii) performing an electrolysis to convert at least a part of the hydrogen bromide of the hydrogen bromide aqueous solution into bromine by operating the one or more electrolytic cells (53); and
iv) recovering a liquid effluent (49) comprising bromine from the anode side and a gaseous effluent (47) comprising hydrogen at the cathode side.

## Description

### Technical field

This invention relates to processes and installations for producing hydrogen from industrial gas streams. It involves techniques for reducing the concentrations of harmful acid gases, such as hydrogen sulfide (H₂S) and ammonia (NH₃), in gas emissions.

### Technical background

Acid gases are undesirable components in various industrial gas streams, primarily due to their corrosive nature and environmental impact. The release of acid gases, such as hydrogen sulfide (H₂S) into the atmosphere contributes to problems like acid rain. Consequently, stringent environmental regulations require industries to limit the emission of these gases into the atmosphere.

The most common sources of acid gases are combustion processes, oil and gas refining, and the treatment of sour natural gas. In these applications, gases like H₂S must be removed to prevent equipment corrosion, ensure safety, and comply with environmental regulations.

Conventional acid gas treatment typically involves using chemical solvents to absorb the unwanted gases from the stream. These solvents can be categorized as amines (e.g., monoethanolamine (MEA), diethanolamine (DEA)), physical solvents, or hybrid mixtures. The amine-based processes are highly efficient for removing H₂S but involve high energy requirements for solvent regeneration.

Membrane-based separation technology has been increasingly explored for acid gas treatment. Membranes selectively permeate certain gases, allowing H₂S to be separated from methane-rich streams in natural gas processing.

Emerging technologies in acid gas treatment involve the use of solid sorbents, such as zeolites, metal-organic frameworks (MOFs), or activated carbon, for the adsorption of acid gases.

For example, WO2015/006873 discloses a method of producing sulfuric acid from a sour tail gas that comprises the steps of (a) obtaining a sour tail gas stream comprising H₂S or reduced sulfur species or a combination thereof from an oil and gas facility; (b) subjecting the sour tail gas stream to oxidation and obtaining an oxidized gas stream comprising SO₂; and, (c) utilizing the oxidized gas stream to obtain sulfuric acid and an SO₂ reduced tail gas stream.

The method may further comprise subjecting the oxidized gas stream to a regenerable absorption process.

Additionally, catalytic methods for converting H₂S to elemental sulfur via the Claus process, or utilizing oxidation catalysts to convert SO₂ to sulfuric acid, are known.

For example, most of the plants and refineries in operation today use the Claus process, in which reaction proceeds in two steps:

2 H₂S + 3 O₂ → 2 SO₂ + 2 H₂O

4 H₂S + 2 SO₂ → 3 S₂ + 4 H₂O

Where S₂ represents sulfur vapour, which is then condensed and conveyed in the form of melt or solid.

However, the process has limitations in that it requires an additional co-feed of fuel for lean streams (otherwise the flame inside the furnace becomes unstable), and it emits SOx.

WO93/20008 discloses a combination process for the removal of sulfur oxides (SOx) from gases containing both SOx and oxygen. The fluid used to remove the SOx contains sulfuric acid and bromine. The SOx is converted to sulfuric acid and the bromine is thereafter converted to hydrobromic acid. The hydrobromic acid is concentrated and catalytically converted to bromine for ultimate recycling in the SOx removal step. The SOx is finally recovered as a strong sulfuric acid.

WO2024/022950 discloses a process for producing hydrogen that comprises the following steps: a) providing a starting mixture containing bromine, water and a sulfur containing compound, b) reacting the starting mixture provided in step a) so as to produce a reaction mixture effluent comprising sulfuric acid and hydrogen bromide, c) separating the reaction mixture effluent obtained in step b) into one or more hydrogen bromide enriched compositions and into one or more sulfuric acid enriched compositions, wherein at least one hydrogen bromide enriched composition contains at most 1,000 ppm of sulfuric acid, wherein step c) comprises at least two distillation steps, d) subjecting at least a portion of the at least one hydrogen bromide enriched composition containing at most 1,000 ppm of sulfuric acid obtained in step c) to an electrolysis so as to obtain hydrogen and a bromine containing composition, wherein the electrolysis cell is operated at an operational temperature of at least 70°C, and e) recycling at least a portion of the bromine containing composition obtained in step d) back to step a).

There is still a need for a process and an installation for the production of hydrogen that allows for improved yield and/or faradaic efficiency.

### Summary

It has now been found that it is possible to improve the faradaic efficiency of hydrogen bromide electrolysis to improve the yield of hydrogen produced and minimize or avoid bromide crossover through the membrane by performing electrolysis in acid conditions.

According to a first aspect, the disclosure provides a process of hydrogen production remarkable in that the comprises the following steps:
**i)** providing an electrolysis unit comprising one or more electrolytic cells, each comprising an anode, a cathode, and an ion-exchange membrane placed between the anode and the cathode;
**ii)** providing an anolyte comprising hydrogen bromide at a concentration ranging from 0.5 to 12.5 M; and a catholyte; wherein the catholyte comprises an aqueous solution of one or more strong acids selected from hydrochloric acid, nitric acid, sulfuric acid, perchloric acid, hydroiodic acid, or any mixtures thereof, and wherein the catholyte has a pH of at most 1.0;
**iii)** performing an electrolysis to convert at least a part of the hydrogen bromide of the hydrogen bromide aqueous solution into bromine by operating the one or more electrolytic cells under electrolysis conditions; and
**iv)** recovering a liquid effluent comprising bromine from the anode side and a gaseous effluent comprising hydrogen at the cathode side.

The person skilled in the art will adapt the concentration of the one or more strong acids to reach the desired pH. For example, the concentration of the one or more strong acids in the aqueous solution is at least 5000 ppm and may be increased if necessary.

In one or more embodiments, the catholyte is a bromine-free solution; and/or the catholyte has a pH of at most 0.9; preferably at most 0.8, more preferably at most 0.5; even more preferably at most 0.2.

in one or more embodiments, the catholyte comprises an aqueous solution of one or more strong acids at a concentration ranging from 0.9 to 20.0 M; and/or the catholyte is or comprises an aqueous solution of sulfuric acid.

In one or more embodiments, the anolyte has a pH of at most 0.5; and/or the anolyte further comprises one or more strong acids selected from hydrochloric acid, nitric acid, sulfuric acid, perchloric acid, hydroiodic acid, or any mixtures thereof; with preference, the anolyte further comprises sulfuric acid.

In one or more embodiments, the pH of the anolyte is lower than the one of the catholyte and/or at least one selected from the anolyte and the catholyte has a pH of at most -0.1, preferably both have a pH of at most -0.1.

In one or more embodiments, the anolyte is produced from an acid gas wherein the production of the anolyte comprises:
a) providing bromine;
b) providing acid gas comprising hydrogen sulfide, and optionally ammonia, and reacting the acid gas with bromine in a first reaction zone under first reaction conditions comprising a first temperature of at most 80°C to obtain a first liquid phase comprising disulfur dibromide;
c) optionally, separating hydrogen bromide, which is also obtained in step b), from the first liquid phase and recovering a first stream comprising disulfur dibromide and a second stream comprising hydrogen bromide;
d) mixing the obtained first liquid phase, or the first stream if applicable, with an additional amount of bromine and water in a second reaction zone and under second reaction conditions comprising a second temperature of at least 80°C, to obtain a second liquid phase comprising sulfuric acid and hydrogen bromide, wherein the second temperature is higher than the first temperature;
e) optionally, separating the second liquid phase to obtain a third stream containing unreacted disulfur dibromide and a fourth stream comprising sulfuric acid and hydrogen bromide;
g) recovering an aqueous solution of hydrogen bromide comprising at least a part of the second liquid phase, or of the fourth stream if applicable, or of the second stream if applicable, or any mixture thereof; and providing it in step ii) as the anolyte;
with preference, at least a part of the second liquid phase, or of the fourth stream if applicable, is subjected to a two-step distillation, wherein the second distillation step is performed at a temperature and a pressure higher than the temperature and the pressure of the first distillation step to obtain a fifth stream comprising sulfuric acid; and wherein said fifth stream is provided in step ii) as the catholyte.

With preference, the installation to perform the said process comprises:
- a reactor as a first reaction zone to produce a first liquid phase of disulfur dibromide; preferably the reactor is a column reactor;
- optionally, a decanter as a means to separate and recover a first stream of disulfur dibromide and a second stream comprising hydrogen bromide;
- a reactor as a second reaction zone to produce a second liquid phase comprising sulfuric acid, and lines to convey the first liquid phase obtained in the first reaction zone to the second reaction zone;
- optionally, a decanter as a means to separate and recover a third stream containing unreacted disulfur dibromide and a fourth stream comprising sulfuric acid;
- optionally, a distillation unit comprising at least a first distillation column and a second distillation column arranged in series and lines to convey the second liquid phase, or the fourth stream if applicable, to the distillation unit;
- an electrolysis unit comprising one or more electrolytic cells and means to convey a catholyte to the electrolysis unit;
- means to convey at least a part of the second liquid phase, or of the fourth stream if applicable, or of the second stream if applicable, or any mixture thereof; to the electrolysis unit; and
- optionally, means to recover a bromine-containing stream from the electrolysis unit and to recycle it to the first reaction zone and/or the second reaction zone.

In one or more embodiments, the anolyte and the catholyte are both produced from an acid gas, wherein the process comprises:
a) providing bromine;
b) providing acid gas comprising hydrogen sulfide and optionally ammonia, and reacting the acid gas with bromine in a first reaction zone under first reaction conditions comprising a first temperature of at most 80°C to obtain a first liquid phase comprising disulfur dibromide;
c) optionally, separating hydrogen bromide, which is also obtained in step b), from the first liquid phase and recovering a first stream comprising disulfur dibromide and a second stream comprising hydrogen bromide;
d) mixing the obtained first liquid phase, or the first stream if applicable, with an additional amount of bromine and water in a second reaction zone and under second reaction conditions comprising a second temperature of at least 80°C, to obtain a second liquid phase comprising sulfuric acid and hydrogen bromide, wherein the second temperature is higher than the first temperature;
e) optionally, separating the second liquid phase to obtain a third stream containing unreacted disulfur dibromide and a fourth stream comprising sulfuric acid and hydrogen bromide;
f) performing a two-step distillation on the second liquid phase, or on the fourth stream if applicable, wherein the second distillation step is performed at a temperature higher than the temperature of the first distillation step to obtain a fifth stream comprising sulfuric acid and a sixth stream comprising hydrogen bromide;
g) recovering the fifth stream comprising sulfuric acid and providing it in step ii) as the catholyte and recovering one or more from the sixth stream, the stream exiting the second step of distillation, the second stream if applicable, and any mixture thereof, and providing it in step ii) as the anolyte.

With preference, an installation to perform said process comprises
- a reactor as a first reaction zone to produce a first liquid phase of disulfur dibromide; preferably the reactor is a column reactor;
- optionally, a decanter as a means to separate and recover a first stream of disulfur dibromide and a second stream comprising hydrogen bromide;
- a reactor as a second reaction zone to produce a second liquid phase comprising sulfuric acid, and lines to convey the first liquid phase obtained in the first reaction zone to the second reaction zone;
- optionally, a decanter as a means to separate and recover a third stream containing unreacted disulfur dibromide and a fourth stream comprising sulfuric acid;
- a distillation unit comprising at least a first distillation column and a second distillation column arranged in series and lines to convey the second liquid phase, or the fourth stream if applicable, to the distillation unit;
- an electrolysis unit comprising one or more electrolytic cells;
- means to convey a fifth stream comprising sulfuric acid from the distillation unit to the electrolysis unit;
- means to convey one or more of the sixth stream exiting the distillation unit, the stream exiting the distillation unit, the second stream if applicable, and any mixture thereof, to the electrolysis unit;
- optionally, means to recover a bromine-containing stream from the electrolysis unit and to recycle it to the first reaction zone and/or the second reaction zone.

Whatever the embodiment selected one or more of the following may be true:
The process may further comprise the step of recovering the bromine-containing stream from the electrolysis reaction and recycling it to the first reaction zone and/or the second reaction zone.

The acid gas may comprise ammonia and bromine is provided to have a molar ratio Br₂ / (H₂S + NH₃) in the first reaction zone of at least 1.5; and/or step c) may be performed and at least a part the second stream comprising hydrogen bromide is recycled into the anolyte.

Step d) of separation of the second liquid phase may be a decantation step and/or the third stream containing unreacted disulfur dibromide may be recycled into the second reaction zone.

The first reaction conditions may comprise a temperature ranging from 15°C to 60°C; and/or the second reaction conditions may comprise a temperature ranging from 90°C to 325°C.

The second reaction conditions may comprise a mass ratio between disulfur dibromide and water from 1:0.2 to 1:2, preferably from 1:0.3 to 1:1, most preferably from 1:0.5 to 1:0.7.

In one or more embodiments, the electrolysis conditions of step iii) comprise an anode current density ranging from 2.5 to 10.0 kA/m².

Alternatively, the electrolysis conditions of step iii) comprise an anode current density ranging from 0.5 to less than 2.5 kA/m²; and the process further comprises a step v) of separating the liquid effluent comprising bromine by distillation or by decantation in a separation unit to obtain a third liquid phase comprising bromine.

### Description of the Figures

- Figure 1 illustrates an example of a process and installation according to the disclosure.
- Figure 2 illustrates an embodiment of a process and installation according to the disclosure.
- Figure 3 illustrates an embodiment of a process and installation according to the disclosure.
- Figure 4 illustrates a glass 2-wall reactor
- Figure 5 illustrates electrolytic cell configurations.

### Detailed description

For the disclosure, the following definitions are given:
The terms "comprising", "comprises" and "comprised of' as used herein are synonymous with "including", "includes" or "containing", "contains", and are inclusive or open-ended and do not exclude additional, non-recited members, elements or method steps. The terms "comprising", "comprises" and "comprised of' also include the term "consisting of'.

The recitation of numerical ranges by endpoints includes all integer numbers and, where appropriate, fractions subsumed within that range (e.g., 1 to 5 can include 1, 2, 3, 4, 5 when referring to, for example, a number of elements, and can also include 1.5, 2, 2.75 and 3.80, when referring to, for example, measurements). The recitation of endpoints also includes the recited endpoint values themselves (e.g., from 1.0 to 5.0 includes both 1.0 and 5.0). Any numerical range recited herein is intended to include all sub-ranges subsumed therein.

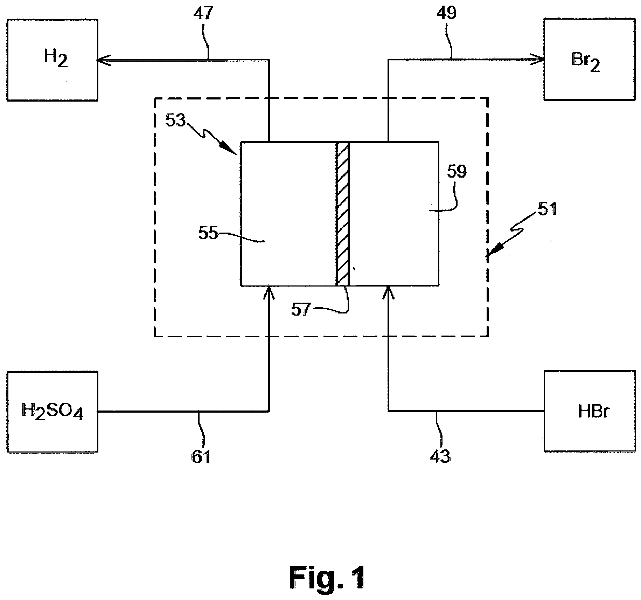

The present disclosure provides a process for the production of concentrated sulfuric acid and an installation to be used to perform such a process. The process and the installation will therefore be described jointly. Reference is made to Figures 1 to 3

The disclosure provides a process of hydrogen production, characterized in that the process comprises the following steps:
**i)** providing an electrolysis unit 51 comprising one or more electrolytic cells 53 each comprising an anode 59, a cathode 55, and an ion-exchange membrane 57 placed between the anode and the cathode;
**ii)** providing an anolyte 43 comprising hydrogen bromide at a concentration ranging from 1.2 to 8.0 M; and a catholyte 61; wherein the catholyte comprises an aqueous solution of one or more strong acids selected from hydrochloric acid, nitric acid, sulfuric acid, perchloric acid, hydroiodic acid, or any mixtures thereof, and wherein the catholyte has a pH of at most 1.0;
**iii)** performing an electrolysis to convert at least a part of the hydrogen bromide of the hydrogen bromide aqueous solution into bromine by operating the one or more electrolytic cells 53 under electrolysis conditions; and
**iv)** recovering a liquid effluent 49 comprising bromine from the anode side and a gaseous effluent 47 comprising hydrogen at the cathode side.
**v)** optionally separating said liquid effluent 49 into a third liquid phase 63 comprising bromine and a fourth liquid phase 65 comprising unreacted hydrogen bromide.

As regards **step** i) of providing one or more electrolytic cells 53

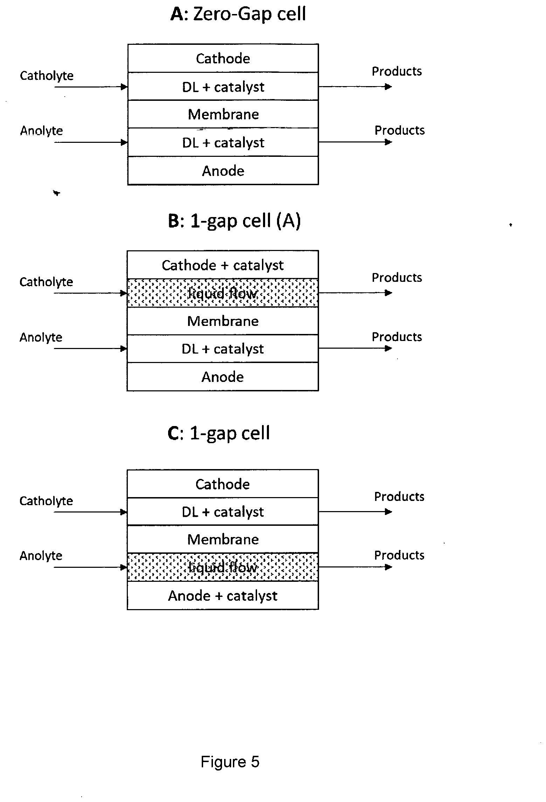

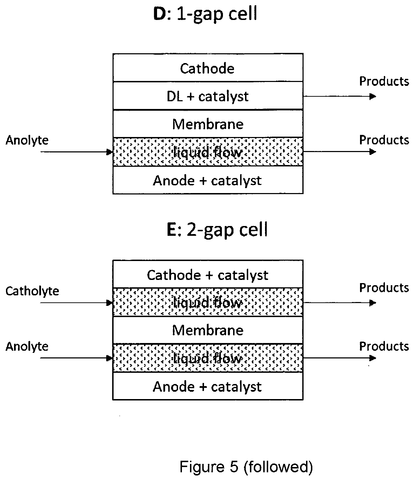

According to the disclosure, the one or more electrolytic cells 53 are selected from zero-gap electrolytic cells, two-gap electrolytic cells, or one-gap electrolytic cells, which could be catholyte-free one-gap electrolytic cells. Preferably the one or more electrolytic cells are zero-gap electrolytic cells, such as membrane electrode assembly (MEA). The different configurations are illustrated in Figure 5.

Suitable materials for the diffusion layer are known to the person skilled in the art. It is preferred that the diffusion layer is a conductive material. For example, the diffusion layer is a composite material comprising polytetrafluoroethylene (PTFE) and a conductive material such as carbon particles.

The anode catalyst and the cathode catalyst may be any suitable catalyst known from the art. The anode catalyst and the cathode catalyst can be the same or different.

For example, the anode catalyst and/or the cathode catalyst are or comprise one or more transition metal-based catalysts comprising ruthenium, rhodium, palladium, osmium, iridium, platinum, titanium, cobalt, iron, nickel, niobium, molybdenum, alloys of titanium, alloys of cobalt, alloys of iron, alloys of nickel, alloys of niobium, alloys of molybdenum, oxides of ruthenium, oxides of rhodium, oxides of palladium, oxides of osmium, oxides of iridium, and oxides of platinum and any mixtures thereof.

For example, the anode catalyst comprises platinum; with preference the anode catalyst comprises at least 0.5 wt.% of platinum based on the total weight of the anode catalyst. However, it was reported that at high bromine concentration platinum losses could occur due to dissolution and poisoning (Kyu Taek Cho, Michael C. Tucker, Adam Z. Weber, Energy Technology, Volume 4, Issue 6, 2016, Pages 655-678).

Alternatively, DSA^{®} brand anode catalysts produced by De Nora company could be applied. This type of anode uses mixed metal oxide (MMO) coating which allows a long and stable operation.

Also, Lead Dioxide Titanium Electrode (Ti/PbO₂) anode could be used. The lead dioxide coating on titanium substrate has strong corrosion resistance and is suitable for the media.

Mentioned anodes could be further modified by doping Ce or Bi metals to the anode catalyst using the techniques known in the art (Pengfei Xu, Xiaohong He, Junwei Mao and Yongming Tang, Journal of The Electrochemical Society, Volume 166, Number 13, 2019, 638).

For example, the cathode catalyst comprises platinum; with preference the cathode catalyst comprises 0.5 wt.% of platinum based on the total weight of the cathode catalyst.

The ion exchange membrane is a cation-exchange membrane (CEM), preferably a proton-exchange membrane (PEM). Both types of membranes are well-known by the person skilled in the art. Typical cation exchange membranes include proton conducting membranes, such as the perfluorosulfonic acid polymer available under the trade designation Nation from E. I. du Pont de Nemours and Company (DuPont) of Wilmington, Del. A proton-exchange membrane, or polymer-electrolyte membrane (PEM), is a semipermeable membrane generally made from ionomers and designed to conduct protons while acting as an electronic insulator and reactant barrier, *e.g*., to oxygen and hydrogen gas.

Another example of commercial PEM membranes are Aquivion membranes developed by Solvay company.

Thus, the cation-exchange membrane can further comprise an ionomer, more particularly an ionomer comprising fluoropolymer having one or more sulfonic acid groups or one or more pendant sulfonic acid groups. For example, the cation-exchange membrane can comprise one or more layers, wherein the layer or at least one of the layers comprises an ionomer, more particularly an ionomer comprising fluoropolymer having one or more sulfonic acid groups or one or more pendant sulfonic acid groups.

For example, the ionomer comprises a perfluorinated sulfonic acid ionomer. For example, said perfluorinated sulfonic acid ionomer comprises sulfonated tetrafluoroethylene based fluoropolymer-copolymer (such as Nation^{®} or 1,1,2,2-Tetrafluoroethene;1,1,2,2-tetrafluoro-2-[1,1,1,2,3,3-hexafluoro-3-(1,2,2-trifluoroethenoxy)propan-2-yl]oxyethanesulfonic acid), SSC, Aciplex, Flemion, 3M-perfluorinated sulfonic acid ionomer, Aquivion, an ionene, or a combination thereof.

Thus, In one or more embodiments, the ion-exchange membrane is a proton exchange membrane comprising one or more layers, wherein the layer or at least one of the layers comprises an ionomer comprising a fluoropolymer having one or more pendant sulfonic acid groups.

As regards **step ii)** of providing the anolyte 43 at the anode side and the catholyte 61 at the cathode side

The anolyte 43 is provided at the anode side and comprises hydrogen bromide at a concentration ranging from 0.5 to 12.5 M.

For example, hydrogen bromide (HBr) is present in the anolyte 43 at a concentration of at least 0.5 M or at least 0.6 M; preferably at least 0.8 M or at least 1.0 M more preferably at least 1.2 M or at least 1.5 M; even more preferably at least 1.8 M or at least 2.0 M; most preferably, at least 2.2 M or at least 2.5 M; and even most preferably, at least 2.8 M or at least 3.0 M.

For example, hydrogen bromide (HBr) is present in the anolyte 43 at a concentration of most 12.5 M or at most 12.0 M; preferably at most 11.5 M; more preferably at most 11.0 M; even more preferably at most 10.5 M; most preferably at most 10.0 M, and even most preferably at most 9.5 M or at most 9.0 M.

In a preferred embodiment, hydrogen bromide (HBr) forms a constant-boiling azeotrope mixture.

In one or more embodiments, hydrogen bromide (HBr) is present in the anolyte 43 at a content ranging from 0.5 to 9.0 M; preferably ranging from 1.0 to 8.5 M more preferably ranging from 1.5 to 8.0 M; even more preferably ranging from 2.0 to 7.0 M or from 2.5 to 6.0 M or from 2.8 to 5.5 M or from 3.0 to 5.0 M.

In a preferred embodiment, the anolyte 43 is metal-free.

The anolyte further comprises one or more strong acids selected from hydrochloric acid, nitric acid, sulfuric acid, perchloric acid, hydroiodic acid, or any mixtures thereof; with preference, the anolyte further comprises sulfuric acid. For example, the anolyte may further comprise one or more strong acids at a concentration ranging from 0.9 to 20.0 M.

For example, the anolyte has a pH of at most 0.5; preferably at most 0.3; more preferably at most 0.2; even more preferably at most 0.1; most preferably at most 0; even most preferably at most -0.2; or at most -0.3; or at most -0.5; or at most -0.8; or at most -0.9.

The pH of the anolyte can be the same or different than the pH of the catholyte; with preference, the pH of the anolyte is different from the pH of the catholyte. When different, the pH of the anolyte can be greater or lower than the pH of the catholyte; with preference, the pH of the anolyte is lower than the pH of the catholyte.

The catholyte is provided at the cathode side and comprises an aqueous solution of one or more strong acids; preferably at a concentration ranging from 0.9 to 20.0 M.

In one or more embodiments, the catholyte comprises an aqueous solution of one or more strong acids selected from hydrochloric acid, sulfuric acid, or any mixtures thereof; with preference, the catholyte is or comprises an aqueous solution of sulfuric acid.

For example, hydrochloric acid is present in the catholyte 61 and/or in the anolyte 43 at a concentration of at least 2.8 M or at least 3.0, preferably at least 3.5 M or at least 4.0 M more preferably at least 4.5 M or at least 5.0 M; even more preferably at least 5.5 M or at least 6.0 M; most preferably, at least 6.5 M or at least 7.0 M; and even most preferably, at least 7.5 M or at least 8.0 M.

For example, hydrochloric acid is present in the catholyte 61 and/or in the anolyte 43 at a concentration of most 20.0 M or at most 19.0 M; preferably at most 18.0 M; more preferably at most 17.0 M; even more preferably at most 16.0 M; most preferably at most 15.0 M, and even most preferably at most 14.0 M or at most 13.0 M.

For example, one or more selected from nitric acid, sulfuric acid, perchloric acid, hydroiodic acid, or any mixtures thereof are present in the catholyte 61 and/or in the anolyte 43 at a concentration of at least 0.9 M or at least 1.0, preferably at least 1.2 M; more preferably at least 1.5 M; even more preferably at least 1.8 M or at least 2.0 M; most preferably, at least 2.2 M or at least 2.5 M; and even most preferably, at least 2.8 M or at least 3.0 M.

For example, one or more selected from nitric acid, sulfuric acid, perchloric acid, hydroiodic acid, or any mixtures thereof are present in the catholyte 61 and/or in the anolyte 43 at a concentration of most 9.0 M or at most 8.5 M; preferably at most 8.0 M; more preferably at most 7.5 M; even more preferably at most 7.0 M; most preferably at most 6.5 M, and even most preferably at most 6.0 M.

The catholyte 61 is preferably a bromine-free solution.

For example, the catholyte has a pH of at most 1.0 or at most 0.8; preferably at most 0.5 or at most 0.3; more preferably at most 0.2; even more preferably at most 0.1; most preferably at most 0; even most preferably at most -0.2; or at most -0.3; or at most -0.5; or at most -0.8; or at most -0.9.

For example, both the catholyte and the anolyte have a pH of at most 0.5; preferably at most 0.3; more preferably at most 0.2; even more preferably at most 0.1; most preferably at most 0; even most preferably at most -0.2; or at most -0.3; or at most -0.5; or at most -0.8; preferably with the proviso that the pH of the anolyte is lower than the pH of the catholyte.

For example, the anolyte 43 and/or the catholyte 61 have liquid minute space velocity ranging from 0.1 to 20; preferably ranging from 0.2 to 2; wherein the liquid minute space velocity (LMSV) is V1/V2, where V1 [L/min] - flow, V2 - volume of half-cell (between to electrode and membrane) wherein the LMSV is normalised.

### As regards step iii) of performing an electrolysis

Operating the one or more electrolytic cells 53 comprises passing a current between the anode and the cathode.

For example, the electrolysis conditions comprise an anode current density of at least 0.5 kA/m² to 10.0 kA/m².

For example, the electrolysis conditions comprise an anode current density ranging from 0.5 to 10.0 kA/m²; preferably, from 0.6 to 9.0 kA/m²; more preferably, from 1.0 to 8.5 kA/m²; even more preferably from 1.5 to 8.0 kA/m² and most preferably from 2.0 to 7.8 kA/m² or from 2.2 to 7.5 kA/m².

In a first embodiment, the electrolysis conditions comprise an anode current density ranging from 0.5 to less than 2.5 kA/m²; preferably, from 0.6 to 2.4 kA/m²; more preferably, from 0.7 to .2.3 kA/m²; even more preferably from 0.8 to 2.2 kA/m² and most preferably from 0.9 to 2.1 kA/m² or from 1.0 to 2.0 kA/m².

In such an embodiment, the process may further comprise step v) of separating said liquid effluent 49 into a third liquid phase 63 comprising bromine and a fourth liquid phase 65 comprising unreacted hydrogen bromide.

In a second embodiment, the electrolysis conditions comprise an anode current density ranging from 2.5 to 10.0 kA/m²; preferably, from 3.0 to 9.0 kA/m²; more preferably, from 3.5 to 8.5 kA/m²; even more preferably from 4.0 to 8.0 kA/m² and most preferably from 4.5 to 7.8 kA/m² or from 5.0 to 7.5 kA/m².

For example, the electrolysis conditions comprise a voltage of at least 0.9 V or at least 1.0 V; preferably at least 1.1 V or at least 1.2 V.

In a preferred embodiment, the electrolysis conditions comprise a voltage of at least 1.3 V or at least 2.0 V; preferably at least 2.5 V or at least 3.0 V, more preferably at least 3.5 V or at least 4.0 V, even more preferably at least 4.5 V, most preferably at least 5.0 V and even most preferably at least 5.2 V or at least 5.5 V.

For example, the electrolysis conditions comprise a voltage ranging from 0.9 V to 10.0 V or from 1.0 V to 10.0 V; preferably from 1.1 V to 9.5 V, more preferably from 1.2 V to 9.0 V.

In a preferred embodiment, the electrolysis conditions comprise a voltage ranging from 1.3 V to 10.0 V or from 3.0 V to 10.0 V; preferably from 3.5 V to 9.5 V, more preferably from 4.0 V to 9.0 V, even more preferably from 4.5 V to 8.5 V, most preferably from 5.0 V to 8.0 V and even most preferably from 5.2 V to 7.8 V or from 5.5 V to 7.5 V.

The electrolysis conditions comprising high voltage and high current density ensure maximum HBr conversion (>50%) per pass and formation of two-phases system as a liquid effluent 49.

For example, the electrolysis conditions comprise a temperature of the solution during electrolysis that ranges from 20 to 100°C; preferably from 40 to 95°C; more preferably from 50 to 90°C; and even more preferably from 60 to 85°C.

### As regards step iv)

The liquid effluent 49 comprises produced bromine, water, and possibly unreacted hydrogen bromide. In one or more embodiments, step iv) further comprises recovering a gaseous effluent 47 comprising hydrogen at the cathode side.

In a preferred embodiment, step iv) further comprises cooling the liquid effluent 49 at a temperature ranging from 10 to 40°C before the step v) of separation. This can be done using one or more heat exchangers.

### As regards optional step v) of separating the liquid effluent 49 comprising bromine

The separation in step v) may be performed by distillation or decantation. The bromine separation unit 81 therefore comprises a separation funnel or a decanter.

Indeed, In one or more embodiments the separation in step v) is performed by decantation. The liquid effluent 49 is directly sent to a separation unit 81 comprising a decanter. There is no need for a washing tower. In such a case step v) comprises a decanting substep comprising passing the liquid effluent 49 comprising bromine in a decanter to obtain the third liquid phase 63 comprising bromine and the fourth liquid phase 65 comprising unreacted hydrogen bromide.

The fourth liquid phase 65 comprising unreacted hydrogen bromide (HBr) is a supernatant that is over the third liquid phase 63 comprising bromine (Br₂). The fourth liquid phase 65 is then going over a wall present within the decanter so that it can be evacuated through a storage tank which can be in fluidic connection with the anode side of the one or more electrolytic cells 53, so that the unreacted hydrogen bromide can be recovered.

The decanting substep is performed for sufficient time to obtain a two-phase separation. For example, the decanting substep is performed during a time of at least 10 minutes; preferably during a time ranging from 10 minutes to 1 hour.

As the pressure into the decanter can be elevated due to the continuous incoming flow of the liquid effluent 49, the decanter can further comprise a degassing outlet that can be useful for removing the vapors, such as oxygen or air. In one or more embodiments, the decanting substep is performed at a pressure of at least 0.12 MPa to avoid vapor formation so the bromine is kept in a liquid phase.

For example; the decanting substep is performed at a pressure of at least 0.12 MPa; preferably at least 0.15 MPa, more preferably at least 0.20 MPa; and/or at most 0.5 MPa.

In a preferred embodiment the separation in step v) is performed by distillation. The liquid effluent 49 is directly sent to a separation unit 81 comprising one or more distillation columns. There is no need for a washing tower. In such a case the step v) comprises a distillation substep comprising: passing the liquid effluent 49 comprising bromine in a distillation unit to obtain a liquid phase 63 comprising bromine and another liquid phase 65 comprising unreacted hydrogen bromide.

In one or more embodiments when said separation step v) is performed by means of distillation, it could be a column known in the art with a reboiler and condenser. For example, the distillation step could be performed at a pressure of at least 0.11 MPa; preferably at least 0.15 MPa, more preferably at least 0.20 MPa; and/or at most 1.0 MPa.

For example, the distillation step could be performed at a temperature of at least 70°C; preferably at least 80°C, more preferably at least 100°C; and/or at most 150°C.

Whatever the first or the second embodiment is performed, the process may further comprise the following substeps:
vi) concentrating the fourth liquid phase 65 to obtain a fifth liquid phase 69 comprising hydrogen bromide, wherein the concentration of the hydrogen bromide in the fourth liquid phase 65 is lower than the concentration of the hydrogen bromide in the fifth liquid phase 69; and
vii) recycling the fifth liquid phase 69 comprising hydrogen bromide at the anode of the one or more electrolytic cells 53 as anolyte 43.

For example, the bromide is present in the fourth liquid phase 65 at a content of less than 30 wt.% of HBr based on the total weight of the fourth liquid phase; preferably less than 20 wt.%; more preferably less than 10 wt.%; even more preferably less than 2 wt.%.

For example, the bromide is present in the fifth liquid phase 69 at a content ranging from 10 to 68.85 wt.% of HBr based on the total weight of the fifth liquid phase; preferably ranging from 15 to 60 wt.%; more preferably ranging from 17 to 55 wt.%; even more preferably ranging from 19 to 50 wt.% or from 20 to 50 wt.% or from 21 wt.% to 49.85 wt.% or from 22 wt.% to 48.85 wt.%.

The concentration in step vi) may be performed in a concentration subunit by removing part of the water or by adding bromide; for example, hydrogen bromide.

For example, the concentration is performed by distillation or by mixing the fourth liquid phase 65 with a gaseous phase 75 comprising hydrogen bromide obtained from a second reaction zone 15. This is advantageously performed in a quench column 73.

In one or more embodiments, the gas stream 79 exiting a first reaction zone 5 and the gas stream 77 exiting the quench column can be vented 83 after an optional pass in a scrubber system 85.

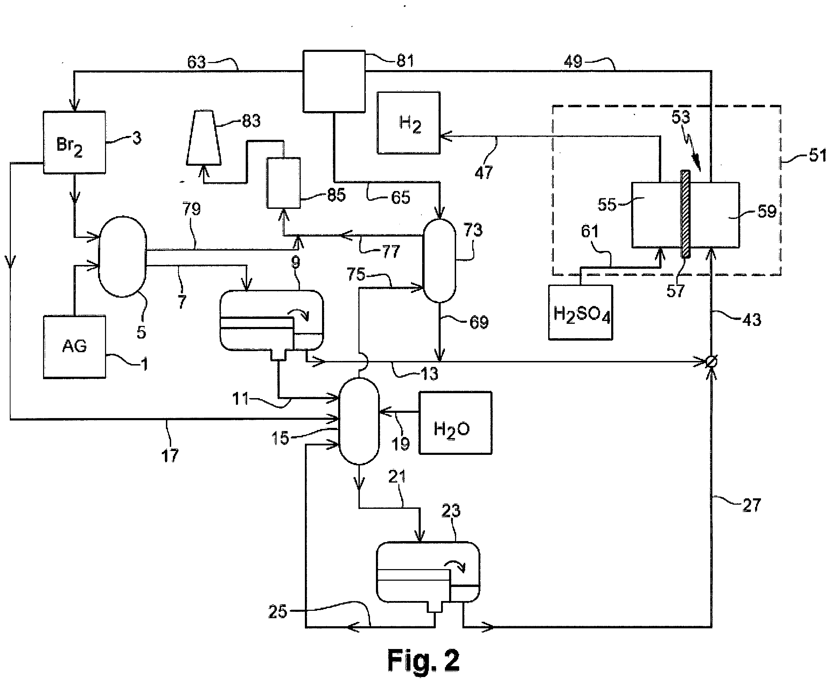

In one or more embodiments illustrated in Figure 2, the anolyte 43 is produced from an acid gas wherein the production of the anolyte comprises:
a) providing bromine (Br₂) 3
b) providing acid gas 1 comprising hydrogen sulfide (H₂S) and ammonia (NH₃), and reacting the acid gas 1 with bromine (Br₂) in a first reaction zone 5 under first reaction conditions comprising a first temperature of at most 80°C to obtain a first liquid phase 7 comprising disulfur dibromide (S₂Br₂);
c) optionally, separating hydrogen bromide, which is also obtained in step b), from the first liquid phase 7 and recovering a first stream 11 comprising disulfur dibromide and a second stream 13 comprising hydrogen bromide;
d) mixing the obtained first liquid phase 7, or the first stream 11 if applicable, with an additional amount of bromine 17 and water 19 in a second reaction zone 15 and under second reaction conditions comprising a second temperature of at least 80°C to obtain a second liquid phase 21 comprising sulfuric acid, wherein the second temperature is higher than the first temperature;
e) optionally, separating the second liquid phase 21 to obtain a third stream 25 containing unreacted disulfur dibromide and a fourth stream 27 comprising sulfuric acid;
g) recovering an aqueous solution of hydrogen bromide comprising at least a part of the second liquid phase 21, or of the fourth stream 27 if applicable, or of the second stream 13 if applicable, or any mixture thereof; and providing it in step ii) as the anolyte 43;
with preference, at least a part of the second liquid phase 21, or of the fourth stream 27 if applicable, is subjected to a two-step distillation, wherein the second distillation step is performed at a temperature higher than the temperature of the first distillation step to obtain a fifth stream 39 comprising sulfuric acid; and wherein said fifth stream 39 is provided in step ii) as the catholyte 61.

In an preferred embodiment, step g) comprises recovering an aqueous solution of hydrogen bromide comprising at least a part of the second liquid phase 21, or of the fourth stream 27 if applicable, or of the second stream 13 if applicable, or of a fourth liquid phase 65 if applicable, or of a fifth liquid phase 69 is applicable, or any mixture thereof; and providing it in step ii) as the anolyte.

For example, the process can be performed in an installation comprising:
- a reactor as a first reaction zone 5 to produce a first liquid phase 7 of disulfur dibromide; preferably the reactor is a column reactor;
- optionally, a decanter 9 as a means to separate and recover a first stream 11 of disulfur dibromide and a second stream 13 comprising hydrogen bromide;
- a reactor (such as a mixing vessel) as a second reaction zone 15 to produce a second liquid phase 21 comprising sulfuric acid, and lines to convey the first liquid phase 7 obtained in the first reaction zone to the second reaction zone 15;
- optionally, a decanter 23 as a means to separate and recover a third stream 25 containing unreacted disulfur dibromide and a fourth stream 27 comprising sulfuric acid;
- optionally, a distillation unit comprising at least a first distillation column and a second distillation column arranged in series and lines to convey the second liquid phase 21, or the fourth stream 27 if applicable, to the distillation unit;
- an electrolysis unit 51 comprising one or more electrolytic cells 53 and means to convey a catholyte 61 to the electrolysis unit 51;
- means to convey at least a part of the second liquid phase 21, or of the fourth stream 27 if applicable, or of the second stream 13 if applicable, or any mixture thereof; to the electrolysis unit; and
- optionally, means to recover a bromine-containing stream 49 from the electrolysis unit 51 and to recycle it to the first reaction zone 5 and/or the second reaction zone 15.

With preference, the installation comprises means to convey at least a part of the second liquid phase 21, or of the fourth stream 27 if applicable, or of the second stream 13 if applicable, or of a fourth liquid phase 65 if applicable, or of the fifth liquid phase 69 if applicable, or any mixture thereof to the electrolysis unit.

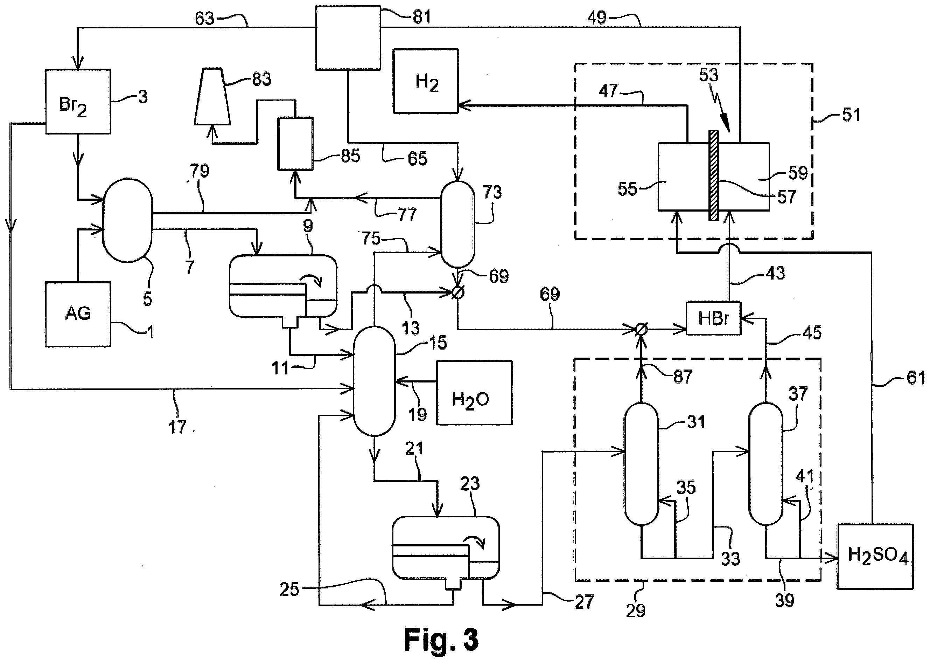

In another embodiment illustrated in Figure 3, the anolyte 43 and the catholyte 61 are both produced from an acid gas, wherein the process comprises:
a) providing bromine 3;
b) providing acid gas 1 comprising hydrogen sulfide and optionally ammonia, and reacting the acid gas 1 with bromine 3 in a first reaction zone 5 under first reaction conditions comprising a first temperature of at most 80°C to obtain a first liquid phase 7 comprising disulfur dibromide;
c) optionally, separating hydrogen bromide, which is also obtained in step b), from the first liquid phase 7 and recovering a first stream 11 comprising disulfur dibromide and a second stream 13 comprising hydrogen bromide;
d) mixing the obtained first liquid phase 7, or the first stream 11 if applicable, with an additional amount of bromine 17 and water 19 in a second reaction zone 15 and under second reaction conditions comprising a second temperature of at least 80°C to obtain a second liquid phase 21 comprising sulfuric acid and hydrogen bromide, wherein the second temperature is higher than the first temperature;
e) optionally, separating the second liquid phase 21 to obtain a third stream 25 containing unreacted disulfur dibromide and a fourth stream 27 comprising sulfuric acid and hydrogen bromide;
f) performing a two-step distillation on the second liquid phase 21, or on the fourth stream 27 if applicable, wherein the second distillation step is performed at a temperature and pressure higher than the temperature and pressure of the first distillation step to obtain a fifth stream 39 comprising sulfuric acid and a sixth stream 87 comprising hydrogen bromide;
g) recovering the fifth stream 39 comprising sulfuric acid and providing it in step ii) as the catholyte 61 and recovering one or more from the sixth stream 87, the stream 45 exiting the second step of distillation, the second stream 13 if applicable, or any mixture thereof, and providing it in step ii) as the anolyte 43;
h) optionally, recovering the bromine-containing stream from the electrolysis reaction and recycling it to the first reaction zone and/or the second reaction zone.

With preference, step g) comprises recovering the fifth stream 39 comprising sulfuric acid and providing it in step ii) as the catholyte 61 and recovering one or more from the sixth stream 87, the stream 45 exiting the second step of distillation, the second stream 13 if applicable, the fourth liquid phase 65 if applicable, the fifth liquid phase 69 if applicable, or any mixture thereof, and providing it in step ii) as the anolyte 43;

For example, the process can be performed in an installation comprising:
- a reactor as a first reaction zone 5 to produce a first liquid phase 7 of disulfur dibromide; preferably the reactor is a column reactor;
- optionally, a decanter 9 as a means to separate and recover a first stream 11 of disulfur dibromide and a second stream 13 comprising hydrogen bromide;
- a reactor (such as a mixing vessel) as a second reaction zone 15 to produce a second liquid phase 21 comprising sulfuric acid, and lines to convey the first liquid phase 7 obtained in the first reaction zone to the second reaction zone 15;
- optionally, a decanter 23 as a means to separate and recover a third stream 25 containing unreacted disulfur dibromide and a fourth stream 27 comprising sulfuric acid;
- a distillation unit 29 comprising at least a first distillation column 31 and a second distillation column 37 arranged in series and lines to convey the second liquid phase 21, or the fourth stream 27 if applicable, to the distillation unit 29;
- an electrolysis unit 51 comprising one or more electrolytic cells 53;
- means to convey a fifth stream 39 comprising sulfuric acid from the distillation unit 29 to the electrolysis unit 51;
- means to convey one or more of the sixth stream 87 exiting the distillation unit, the stream 45 exiting the distillation unit, the second stream 13 if applicable, , and any mixture thereof, to the electrolysis unit 51;
- optionally, means to recover a bromine-containing stream 49 from the electrolysis unit 51 and to recycle it to the first reaction zone 5 and/or the second reaction zone 15.

. With preference means to convey one or more of the sixth stream 87 exiting the distillation unit, the stream 45 exiting the distillation unit, the second stream 13 if applicable, the fourth liquid phase 65 if applicable, the fifth liquid phase 69 if applicable, and any mixture thereof, to the electrolysis unit 51;

### The step a) of providing Bromine

In a preferred embodiment, the disclosure may comprise a step h) of recovering bromine from the electrolysis unit 51 and recycling it to the first reaction zone 5 and/or the second reaction zone 15. Thus at least a part of the bromine provided in step a) may be recycled bromine from step h).

### The first reaction zone 5 and step b) reacting the acid gas 1 with bromine 3

The conversion of the acid gas comprising hydrogen sulfide into at least disulfur dibromide takes place in the first reaction zone 5. According to the disclosure, the acid gas further comprises ammonia, and reacting the acid gas 1 with bromine 3, further comprises the conversion of ammonia into hydrogen bromide and nitrogen into the first reaction zone 5.

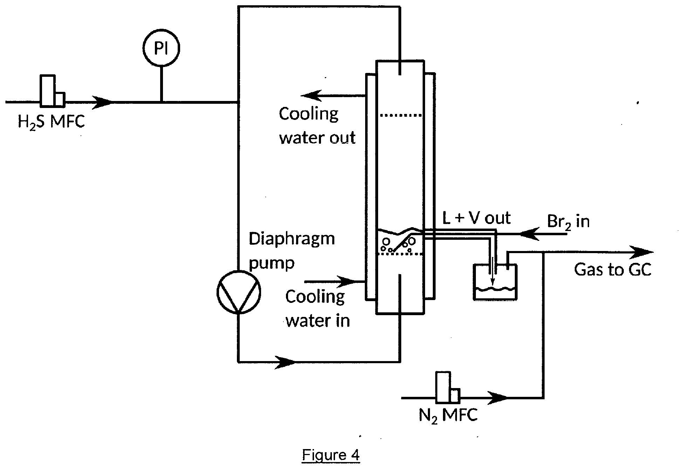

The first reaction zone can be a reactor of any design known in the art. In a preferred embodiment, the reactor is a column reactor, configured to allow for the continuous flow of reactants and products through the column, while maintaining a high level of contact between the reactants. Column reactors are well-known to the person skilled in the art and consist of a long cylindrical vessel or column, typically made of stainless steel or glass. With preference, the column reactor is a 2-wall glass column reactor. An example of such a column reactor is provided in Figure 4.

In another preferred embodiment, the first reaction zone 5 is a batch reactor, designed to process a single batch of reactants at a time, with the reaction taking place in a closed vessel. Further, the reaction products may be separated and used as described below.

The first reaction zone 5 is provided with at least one inlet for allowing the input of the acid gas 1 and at least one outlet for transferring the obtained first liquid phase 7 comprising at least disulfur dibromide, via conveying means, to the second reaction zone 15.

Bromine 3 can be provided to the first reaction zone 5 as a gaseous stream or as a 2-phase liquid stream in combination with water. Bromine is a compound used in different domains of the industry. It can be obtained from the bromide contained in the seawater using modified Balard's process. Alternatively, electrolysis of HBr can provide bromine.

Hydrogen sulfide appears as a colorless gas having a strong odour of rotten eggs. Hydrogen sulfide occurs naturally in crude petroleum, natural gas, volcanic gases, and hot springs. According to the present disclosure, examples of acid gases comprising hydrogen sulfide include exhaust gas produced from natural gas processing, shale gas processing, shale oil associated gas processing, refinery acid gas streams, gas from conventional oil fields, acid gas removal units or acid gas enrichment units. In particular, the acid gas comprising hydrogen sulfide comes from facilities.

For example, a primary feed stream may comprise carbonyl sulfide (COS) and/or other reduced sulfur species in addition to H₂S; and the COS and/or other sulfur species may be removed from the primary feed stream to produce the gaseous acid gas wherein said gaseous acid gas mainly comprise H₂S as sulfur species.

For example, a primary feed stream may comprise, in addition to ammonia, one or more from hydrocarbons, CO₂, amines (for instance, monoethanolamine (MEA)) and any mixture thereof. For example, a primary feed stream may comprise inert gases, for instance, nitrogen, helium, argon, and any mixture thereof. For example, a primary feed stream may comprise water.

For example, an acid gas 1 suitable for use in the process of the present disclosure is obtained by the treatment of a hydrocarbon feed stream in an oil and gas facility (refinery). For example, the oil and gas refinery comprises a gas/liquid separation unit to produce a methane-containing stream and a gas-reduced liquid stream. The gas-reduced liquid stream can be treated in a refinery that may include various hydrocracking and/or hydro-refining and/or hydro-finishing units, depending on the initial composition of the gas-reduced liquid stream. A liquid stream and a hydrocarbon-containing gaseous stream containing H₂S and NH₃ are produced in the refinery. The gaseous stream containing H₂S can be further treated in a scrubbing unit or an absorbing unit for the production of a product hydrocarbon stream having a reduced concentration of contaminants and an enriched-contaminant gas stream containing H₂S.

According to the disclosure, both the gaseous stream containing H₂S and the enriched-contaminant gas stream containing H₂S can be used as acid gas 1 comprising H₂S in step b) of the present process.

The amount of H₂S in the acid gas 1 may vary from 1 mol.% to 98 mol.% based on the total molar content of the gaseous acid gas. Preferably, the amount of H₂S in the gaseous acid gas is at least 1 mol.% based on the total molar content of the gaseous acid gas; preferably at least 10 mol.%; more preferably at least 30 mol.%; even more preferably at least 50 mol.%; most preferably at least 90 mol.%; even most preferably at least 95 mol.%.

The reactions taking place in the first reaction zone are according to the following equations:

H₂S + Br₂ → 2HBr + S

2H₂S + 3Br₂ → 4HBr + S₂Br₂

2S + Br₂ → S₂Br₂

In one or more embodiments of the present disclosure, the acid gas further comprises ammonia. The amount of ammonia in the acid gas 1 may vary from 1 mol.% to 98 mol.% based on the total molar content of the gaseous acid gas. Preferably, the amount of ammonia in the gaseous acid gas is at least 1 mol.% based on the total molar content of the gaseous acid gas; preferably at least 10 mol.%; more preferably at least 30 mol.%; even more preferably at least 50 mol.%.

The reaction taking place in the first reaction zone with ammonia is according to the following equation:

NH₃ + 1.5 Br₂ → 0.5 N₂ + 3 HBr

The person skilled in the art will have an advantage in ensuring that bromine is in excess relative to ammonia. This will help produce HBr instead of NH₄Br. When bromine is in excess, it fully reacts with ammonia to form hydrogen bromide instead of ammonium salts.

Thus, in the embodiment wherein the acid gas comprises ammonia, bromine is preferably provided to have a molar ratio Br₂ /(H₂S + NH₃) in the first reaction zone 5 of at least 1.5; preferably at least 1.6; more preferably at least 2.0, even more preferably at least 2.5; most preferably at least 3.0, even most preferably at least 3.5, and even most preferably at least 3.6.

In this case the acid gas comprises a mixture of H₂S and ammonia. The amount of the mixture in the acid gas 1 may vary from 2 mol.% to 99 mol.% based on the total molar content of the gaseous acid gas. Preferably, the amount of the mixture in the gaseous acid gas is at least 2 mol.% based on the total molar content of the gaseous acid gas; preferably at least 10 mol.%; more preferably at least 30 mol.%; even more preferably at least 50 mol.%; most preferably at least 90 mol.%; even most preferably at least 95 mol.%.

Those reactions take place in a reactor as the first reaction zone 5. The reactions are performed at a first temperature of at most 80°C. The cold temperature reduces further oxidation of S₂Br₂ and prevents Br₂ from excessive evaporation. Furthermore, it allows up to 100% conversion of the hydrogen sulfide without the need for the presence of a catalyst. Keeping the temperature below 80°C allows for limiting or avoiding the evaporation of bromine and the decomposition of S₂Br₂ to form S precipitates.

Since the reaction (2S + Br₂ ⇄ S₂Br₂) is exothermic, the person skilled in the art may use any cooling device or heat exchanger to keep the reaction temperature under control and below 80 °C or at the targeted first temperature range.

The first reaction conditions, therefore, include a first temperature of at most 80°C; with preference, a first temperature ranging from 15 to 60°C preferably from 19 to 40°C or above, most preferred ranging from 25 to 38°C (i.e., at room temperature). Preferably, the pressure is the atmospheric pressure.

In another embodiment, the first reaction conditions comprise a reaction time of at least 0.01 seconds, for example at least 20 seconds or in another example, at least 2 min.

### The first liquid phase and the optional step c) of separation

The first liquid phase 7 comprising disulfur dibromide is obtained from the reactions presented above for step b). As depicted above, hydrogen bromide (HBr) is also a reaction product as ammonia is present in the acid gas. In one or more embodiments, the separation of the two reaction products can be made by using fractional distillation, due to the different boiling points of disulfur dibromide (around 69°C) and hydrogen bromide (around 123°C in the form of azeotrope).

In another embodiment, water may be present in the first reaction zone (for example when bromine is used as a 2-phase liquid stream with water). The formed hydrogen bromide may dissolve in water, resulting in a liquid mixture of the first liquid phase 7 of sulfur bromide and aqueous hydrogen bromide. In this case, the separation of the disulfur dibromide component and the aqueous solution of HBr may be made by decantation in a decanter 9. Due to the higher density, disulfur dibromide accumulates at the bottom boot and can be separated as a pure phase (first stream 11), whereas the aqueous phase comprising hydrogen bromide and water remains at the top and is separated as the second stream 13 comprising hydrogen bromide.

In embodiments, the separation step c) is performed and the process further comprises mixing the second stream 13 with the sixth stream 87 before the electrolysis reaction of step g).

### Step d) of mixing the obtained first liquid phase or the first stream, with an additional amount of bromine and water in a second reaction zone

The conversion of the disulfur dibromide into sulfuric acid takes place in the second reaction zone 15. The second reaction zone can be a reactor of any design known in the art. In a preferred embodiment, the reactor 15 is a column reactor, configured to allow for the continuous flow of reactants and products through the column, while maintaining a high level of contact between the reactants. In another preferred embodiment, the second reaction zone 15 is a batch reactor, designed to process a single batch of reactants at a time, with the reaction taking place in a closed vessel. Further, the reaction products may be separated and used as described below.

The reaction taking place in the second reaction zone 15 is according to the following equations:

S₂Br₂ + 5Br₂ + 8H₂O → 2H₂SO₄ + 12HBr

The reaction is performed at a second temperature of at least 80°C. This allows a high conversion of the starting material (disulfur dibromide), favorable kinetics enabling faster occurrence of the reaction, and consequently a high concentration of sulfuric acid.

The second reaction conditions include a second temperature of at least 80°C. For example, the second reaction conditions include a second temperature ranging from 90°C to 325°C; preferably, from 100°C to 220°C; more preferably, from 120°C to 150°C.

With preference, the second reaction conditions comprise a pressure from 1 to 10 barA (i.e., from 0.1 to 1.0 MPa), preferably from 2 to 8 barA (i.e., from 0.2 to 0.8 MPa), more preferably from 3 to 7 barA (i.e., from 0.3 to 0.7 MPa).

The water may be demineralized water. The water amount submitted to step c) can be controlled to achieve the desired concentration of sulfuric acid.

In one or more embodiments, the mass ratio between disulfur dibromide and water is 1:0.2 to 1:2, preferably 1:0.3 to 1:1, more preferably 1:0.5 to 1:0.7 with a stoichiometric ratio being most preferred.

### The optional step e) of separation \

In one or more embodiments, the process comprises separating the second liquid phase 21 to obtain a third stream 25 containing unreacted disulfur dibromide and a fourth stream 27 comprising sulfuric acid. This step is advantageously performed by decantation in a decanter 23. Due to the higher density, disulfur dibromide accumulates at the bottom boot and can be separated as a pure phase (third stream 25), whereas the phase comprising sulfuric acid and optionally, water, and unreacted hydrogen bromide, remains at the top and is separated as the fourth stream 27 comprising sulfuric acid.

With preference, the third stream 25 containing unreacted disulfur dibromide is recycled into the second reaction zone 15. Recycling means may comprise lines and an optional pump.

### The step f) of distillation

According to the disclosure, the process may comprise a step f) of performing a two-step distillation on the second liquid phase 21, or on the fourth stream 27 if applicable, wherein the second distillation step is performed at a temperature and pressure higher than the temperature and pressure of the first distillation step; with preference, the second distillation step is performed for a time greater than the time of the first distillation step.

Thus, the step f) of distillation may comprise the following sub-steps:
f-1) a first distillation step performed on the second liquid phase 21, or on the fourth stream 27 if applicable, to obtain a sulfuric acid-containing stream 33 and a sixth stream 87 comprising hydrogen bromide;
f-2 optionally recovering the sixth stream 87 comprising hydrogen bromide and recycling it to the second reaction zone 15;
f-3) performing a second distillation on the sulfuric acid-containing stream 33 wherein the second distillation step is performed at a temperature and pressure higher than the temperature and pressure of the first distillation step to obtain a fifth stream 39 comprising sulfuric acid and a stream 45 comprising hydrogen bromide.

In case step f-2 is performed, the installation further comprises a line (not shown on the figures) to convey the sixth stream 87 exiting the first distillation column 31 to the second reaction zone 15.

For example, the first distillation is carried out at a temperature ranging from 80 to 250°C; preferably from 100 to 220°C; more preferably at a temperature from 150 to 200°C.

For example, the first distillation is carried out for a time ranging from 20 min to 2 hours.

The first distillation step results in a sulfuric acid-containing stream 33 that is directed to the second distillation step and in the sixth stream 87 comprising hydrogen bromide. Stream 35 is a reboiler stream that is recycled in the first column, and the installation may comprise a reboiler on the sulfuric acid-containing stream 33 exiting the first column 31. The reboiler vaporize the liquid at the bottom of the distillation column. This vapor is then reintroduced into the column to help separate components based on their boiling points.

For `example, the second distillation is carried out at a temperature ranging from 120 to 330°C; preferably from 150 to 280°C; more preferably at a temperature from 180 to 250°C.

For example, the first distillation is carried out for a time ranging from 1 to 12 hours.

The second distillation step results in stream 45 comprising hydrogen bromide and in the fifth stream 39 comprising purified sulfuric acid. Stream 41 is a reboiler stream that is recycled in the second column, and the installation may comprise a reboiler on the sulfuric acid-containing stream 39 exiting the second column 37. The stream 45 is preferably mixed in the sixth stream 87 comprising hydrogen bromide for further treatment.

As shown by the examples, it has been found that such a purification step by distillation allows for separating not only hydrogen bromide but also remaining bromine (Br₂) and therefore allows reaching high concentration of H₂SO₄ in the fifth stream 39 comprising sulfuric acid at a concentration of at least 90 wt.% of H₂SO₄ based on the total weight of the fifth stream 39; preferably at least 92 wt.%; more preferably at least 95 wt.%; even more preferably at least 96 wt.%; and most preferably at least 98 wt.%.

### The step h) of recovering the bromine-containing stream

In one or more embodiments, the electrolysis conditions of step iii) comprise an anode current density ranging from 2.5 to 10.0 kA/m²; and step h) of recovering the bromine-containing stream 49 from the electrolysis unit and recycling it to the first reaction zone 5 and/or the second reaction zone 15 is performed.

### Examples

### Example 1

An electrolytic cell comprising Aquvion E98-15 membrane (10 cm2), DSA anode and Pt/Ti cathode was used for tests execution. Both anolyte and catholyte compartments had volume of ~3.9 ml. The catholyte feed comprised 25 wt.% H₂SO₄ and was fed to 5 ml/min for efficient hydrogen removal while membrane wetting. The anolyte feed comprised mixture of HBr (24 wt.%) and H₂SO₄ (50 wt.%) and was fed to cell at rate of 0.4 ml/min. Total test duration was around ~60 min at set constant voltage of 1.1 V and resulting current of ~0.6 A at 70°C maintained by external heating box. The samples were collected in separate cooled vessels and analyzed by means of titration and ion chromatography. Both methods indicated results are within experimental error.

Total amount of bromine in anolyte effluent was 1.75 g (0.086 g per 1 ml of aliquot with d=1.51 g/ml), analysis of catholyte indicated no bromine presence. Calculated Faradaic efficiency was 97.7%.

### Example 2 (comparative)

A test was carried out in the same cell, flow rates, test duration, and temperature, as described in Example 1. 48 wt.% HBr was used as a feed to both anode (0.2 ml/min) and cathode (5 ml/min). The resulting current was ~0.5 A.

The total amount of bromine in anolyte effluent was 1.8 g (0.136 g per 1 ml of aliquot with d=1.39 g/ml), and analysis of catholyte indicated the presence of 0.14 g of bromine. The calculated Faradaic efficiency was 97.3%.

## Claims

1. . A process of hydrogen production is **characterized in that** the comprises the following steps:
**i)** providing an electrolysis unit (51) comprising one or more electrolytic cells (53) each comprising an anode (59), a cathode (55), and an ion-exchange membrane (57) placed between the anode and the cathode;
**ii)** providing an anolyte (43) comprising hydrogen bromide at a concentration ranging from 0.5 to 12.5 M; and a catholyte (61); wherein the catholyte comprises an aqueous solution of one or more strong acids selected from hydrochloric acid, nitric acid, sulfuric acid, perchloric acid, hydroiodic acid, or any mixtures thereof, and wherein the catholyte has a pH of at most 1.0;
**iii)** performing an electrolysis to convert at least a part of the hydrogen bromide of the hydrogen bromide aqueous solution into bromine by operating the one or more electrolytic cells (53) under electrolysis conditions; and
**iv)** recovering a liquid effluent (49) comprising bromine from the anode side and a gaseous effluent (47) comprising hydrogen at the cathode side.

2. The process according to claim 1 is **characterized in that** the catholyte (61) is a bromine-free solution; and/or **in that** the catholyte has a pH of at most 0.8, preferably at most 0.5; more preferably at most 0.2.

3. The process according to claim 1 or 2 is **characterized in that** the catholyte (61) comprises an aqueous solution of one or more strong acids at a concentration ranging from 0.9 to 20.0 M; and/or **in that** the catholyte is or comprises an aqueous solution of sulfuric acid.

4. The process according to any one of claims 1 to 3 is **characterized in that** the anolyte (43) has a pH of at most 0.5; and/or **in that** the anolyte further comprises one or more strong acids selected from hydrochloric acid, nitric acid, sulfuric acid, perchloric acid, hydroiodic acid, or any mixtures thereof; with preference, the anolyte further comprises sulfuric acid.

5. The process according to any one of claims 1 to 4 is **characterized in that** the pH of the anolyte (43) is lower than the one of the catholyte (61) and/or **in that** at least one selected from the anolyte (43) and the catholyte (61) has a pH of at most -0.1, preferably both have a pH of at most -0.1.

6. The process according to any one of claims 1 to 5 is **characterized in that** the anolyte (43) is produced from an acid gas wherein the production of the anolyte comprises:
a) providing bromine (3);
b) providing acid gas (1) comprising hydrogen sulfide, and optionally ammonia, and reacting the acid gas (1) with bromine (3) in a first reaction zone (5) under first reaction conditions comprising a first temperature of at most 80°C to obtain a first liquid phase (7) comprising disulfur dibromide;
c) optionally, separating hydrogen bromide, which is also obtained in step b), from the first liquid phase (7) and recovering a first stream (11) comprising disulfur dibromide and a second stream (13) comprising hydrogen bromide;
d) mixing the obtained first liquid phase (7), or the first stream (11) if applicable, with an additional amount of bromine (17) and water (19) in a second reaction zone (15) and under second reaction conditions comprising a second temperature of at least 80°C, to obtain a second liquid phase (21) comprising sulfuric acid and hydrogen bromide, wherein the second temperature is higher than the first temperature;
e) optionally, separating the second liquid phase (21) to obtain a third stream (25) containing unreacted disulfur dibromide and a fourth stream (27) comprising sulfuric acid and hydrogen bromide;
g) recovering an aqueous solution of hydrogen bromide comprising at least a part of the second liquid phase (21), or of the fourth stream (27) if applicable, or of the second stream (13) if applicable, or of the fourth liquid phase (65) if applicable, or of a fifth liquid phase (69) if applicable, or any mixture thereof; and providing it in step ii) as the anolyte (43);
with preference, at least a part of the second liquid phase (21), or of the fourth stream (27) if applicable, is subjected to a two-step distillation, wherein the second distillation step is performed at a temperature and pressure higher than the temperature and pressure of the first distillation step to obtain a fifth stream (39) comprising sulfuric acid; and wherein said fifth stream (39) is provided in step ii) as the catholyte (61).

7. The process according to any one of claims 1 to 5 is **characterized in that** the anolyte and the catholyte are both produced from an acid gas, wherein the process comprises:
a) providing bromine (3);
b) providing acid gas (1) comprising hydrogen sulfide and optionally ammonia, and reacting the acid gas (1) with bromine (3) in a first reaction zone (5) under first reaction conditions comprising a first temperature of at most 80°C to obtain a first liquid phase (7) comprising disulfur dibromide;
c) optionally, separating hydrogen bromide, which is also obtained in step b), from the first liquid phase (7) and recovering a first stream (11) comprising disulfur dibromide and a second stream (13) comprising hydrogen bromide;
d) mixing the obtained first liquid phase (7), or the first stream (11) if applicable, with an additional amount of bromine (17) and water (19) in a second reaction zone (15) and under second reaction conditions comprising a second temperature of at least 80°C, to obtain a second liquid phase (21) comprising sulfuric acid and hydrogen bromide, wherein the second temperature is higher than the first temperature;
e) optionally, separating the second liquid phase (21) to obtain a third stream (25) containing unreacted disulfur dibromide and a fourth stream (27) comprising sulfuric acid and hydrogen bromide;
f) performing a two-step distillation on the second liquid phase (21), or on the fourth stream (27) if applicable, wherein the second distillation step is performed at a temperature and pressure higher than the temperature and pressure of the first distillation step to obtain a fifth stream (39) comprising sulfuric acid and a sixth stream (87) comprising hydrogen bromide;
g) recovering the fifth stream (39) comprising sulfuric acid and providing it in step ii) as the catholyte (61) and recovering one or more from the sixth stream (87), the stream (45) exiting the second step of distillation, the second stream (13) if applicable, the fourth liquid phase (65) if applicable, the fifth liquid phase (69) if applicable, and any mixture thereof, and providing it in step ii) as the anolyte (43).

8. The process according to any one of claims 6 or 7 is **characterized in that** it further comprises the step of recovering the bromine-containing stream (49) from the electrolysis reaction and recycling it to the first reaction zone (5) and/or the second reaction zone (15).

9. The process according to any one of claims 6 to 8 is **characterized in that** the acid gas comprises ammonia and bromine is provided to have a molar ratio Br₂ / (H₂S + NH₃) in the first reaction zone (5) of at least 1.5; and/or **in that** the step c) is performed and **in that** at least a part the second stream (13) comprising hydrogen bromide is recycled into the anolyte.

10. The process according to any one of claims 6 to 9 is **characterized in that** step d) of separation of the second liquid phase (21) is a decantation step and/or **in that** the third stream (25) containing unreacted disulfur dibromide is recycled into the second reaction zone (15).

11. The process according to any of claims 6 to 10 is **characterized in that** the first reaction conditions comprise a temperature ranging from 15°C to 60°C; and/or **in that** the second reaction conditions comprise a temperature ranging from 90°C to 325°C.

12. The process according to any one of claims 6 to 11 is **characterized in that** the second reaction conditions comprise a mass ratio between disulfur dibromide and water from 1:0.2 to 1:2, preferably from 1:0.3 to 1:1, most preferably from 1:0.5 to 1:0.7.

13. The process according to any one of claims 1 to 12 is **characterized in that** the electrolysis conditions of step iii) comprises an anode current density ranging from 2.5 to 10.0 kA/m² ; or **in that** the electrolysis conditions of step iii) comprises an anode current density ranging from 0.5 to less than 2.5 kA/m²; and the process further comprises a **step v)** of separating the liquid effluent (49) comprising bromine by distillation or by decantation in a separation unit (81) to obtain a third liquid phase (63) comprising bromine.

14. An installation to perform the process of claim 6 is **characterized in that** it comprises:
- a reactor as a first reaction zone (5) to produce a first liquid phase (7) of disulfur dibromide; preferably the reactor is a column reactor;
- optionally, a decanter (9) as a means to separate and recover a first stream (11) of disulfur dibromide and a second stream (13) comprising hydrogen bromide;
- a reactor as a second reaction zone (15) to produce a second liquid phase (21) comprising sulfuric acid, and lines to convey the first liquid phase (7) obtained in the first reaction zone to the second reaction zone (15);
- optionally, a decanter (23) as a means to separate and recover a third stream (25) containing unreacted disulfur dibromide and a fourth stream (27) comprising sulfuric acid;
- optionally, a distillation unit (29) comprising at least a first distillation column (31) and a second distillation column (37) arranged in series and lines to convey the second liquid phase (21), or the fourth stream (27) if applicable, to the distillation unit (29);
- an electrolysis unit (51) comprising one or more electrolytic cells (53) and means to convey a catholyte (61 to the electrolysis unit (51);
- means to convey at least a part of the second liquid phase (21), or of the fourth stream (27) if applicable, or of the second stream (13) if applicable, or the fourth liquid phase (65) if applicable, or of the fifth liquid phase (69) if applicable, or any mixture thereof; to the electrolysis unit; and
- optionally, means to recover a bromine-containing stream (49) from the electrolysis unit (51) and to recycle it to the first reaction zone (5) and/or the second reaction zone (15).

15. An installation to perform the process of claim 7 is **characterized in that** it comprises:
- a reactor as a first reaction zone (5) to produce a first liquid phase (7) of disulfur dibromide; preferably the reactor is a column reactor;
- optionally, a decanter (9) as a means to separate and recover a first stream (11) of disulfur dibromide and a second stream (13) comprising hydrogen bromide;
- a reactor as a second reaction zone (15) to produce a second liquid phase (21) comprising sulfuric acid, and lines to convey the first liquid phase (7) obtained in the first reaction zone to the second reaction zone (15);
- optionally, a decanter (23) as a means to separate and recover a third stream (25) containing unreacted disulfur dibromide and a fourth stream (27) comprising sulfuric acid;
- a distillation unit (29) comprising at least a first distillation column (31) and a second distillation column (37) arranged in series and lines to convey the second liquid phase (21), or the fourth stream (27) if applicable, to the distillation unit (29);
- an electrolysis unit (51) comprising one or more electrolytic cells (53);
- means to convey a fifth stream (39) comprising sulfuric acid from the distillation unit (29) to the electrolysis unit (51);
- means to convey one or more of the sixth stream (87) exiting the distillation unit, the stream (45) exiting the distillation unit, the second stream (13) if applicable, the fourth liquid phase (65) if applicable, the fifth liquid phase (69) if applicable, and any mixture thereof, to the electrolysis unit (51);
- optionally, means to recover a bromine-containing stream (49) from the electrolysis unit (51) and to recycle it to the first reaction zone (5) and/or the second reaction zone (15).
